# EUROPEAN PATENT SPECIFICATION

(11) **EP 0 794 349 B1**
(45) Date of publication and mention of the grant of the patent: **13.06.2001**
(21) Application number: 97301500.1
(22) Date of filing: 06.03.1997
(51) Int. Cl.: F16D 55/224, F16D 65/097

(54) **Disc brake caliper assembly**
Scheibenbremssattel
Etrier pour frein à disque

(30) Priority: 06.03.1996 JP 4910596
(43) Date of publication of application: 10.09.1997
(73) Proprietor: AISIN SEIKI KABUSHIKI KAISHA, Kariya City Aichi Pref. (JP)
(72) Inventor: Anda, Hiroshi, Midori-ku, Nagayo city, Aichi pref (JP); Shimazaki, Toru, Hazu-gun, Aichi pref (JP); Takewaki, Morimasa, Anjo city, Aichi pref (JP)
(74) Representative: SERJEANTS

(56) References cited:
- DE-A- 1 931 752
- DE-A- 2 151 044
- DE-A- 2 225 178
- GB-A- 2 245 322
- US-A- 3 841 444
- US-A- 5 251 727

## Description

### Field of the invention

The present invention relates to a disc brake caliper assembly for use with a brake disc and, more particularly, to a disc brake caliper assembly including a single pad-supporting pin for supporting first and second opposed pads radially outwardly of the brake disc and a spring member for moving the pads away from the brake disc upon brake release.

### Description of the Prior Art

Japanese Utility Model Application laid-open No. Hei 5-45266 discloses a disc brake caliper assembly for use with a brake disc. The disc brake caliper assembly includes first and second opposed pads positioned on opposite sides of the brake disc and movable towards and away from the brake disc; a stationary member for receiving a braking torque from the pads during braking, and a single pad-supporting pin located centrally in a radial plane which bisects the pads. The disc brake caliper assembly further includes a pair of spring members for moving the pads away from the brake disc upon brake release. Each of the spring members is located at a position offset from the central supporting pin.

For moving the pads away from the brake disc upon brake release, the provision of a pair of spring members increases the cost of the disc brake caliper assembly. If one of the spring members were omitted to reduce the cost of the disc brake caliper assembly, a portion of each pad on the side of the central pin remote from the spring could remain in engagement with the brake disc on brake release thereby increasing the drag braking torque and creating abnormal wear on the pads.

US 3841444 discloses a disc brake with a radially open caliper and having an anti-rattle spring for holding down a pair of friction pads. The spring is made of wire and rests against the upper sides of the friction pads and against at least one retaining pin held in the caliper for retaining the pads.

### SUMMARY OF THE INVENTION

It is an object of this invention to reduce both the drag braking torque and the cost.

To achieve the above-stated object, according to the present invention there is provided a disc brake caliper assembly for use with a brake disc comprising
first and second opposed brake pads carried by a single pad-supporting pin for mounting on opposite sides of the brake disc for transferring braking torque from the brake disc to a stationary member of the caliper assembly,
a single spring for separating the pads on brake release in use, the spring comprising
a forwardly extending tail portion for abutting a stationary radially outwardly directed reaction face of the caliper assembly; and
a rearwardly extending resilient spine portion having at a rear end a pair of resilient transversely extending arms contacting central portions of the pair of pads to bias the pads away from the brake disc on brake release;
wherein the pad-supporting pin is offset, in the direction of disc rotation, from a radial centre plane through the pads; and
CHARACTERISED IN THAT the spring and the pad-supporting pin are formed in one piece.

### DRAWINGS

Figure 1 is a sectional view of an embodiment of a disc brake caliper assembly according to the invention;
Figure 2 is a top view of the embodiment;
Figure 3 is a view showing a relation among a pad, a pad-supporting pin and a spring member of an embodiment not in accordance with the invention;
Figure 4 is a view showing a relation between a pad and the spring member of the embodiment;
Figure 5 is a view showing a spring member and a pad-supporting pin of an embodiment of the invention; and
Figure 6 is a side view of a friction pad illustrating the forces experienced during braking.

### DETAILED DESCRIPTION OF PREFERRED EMBODIMENTS

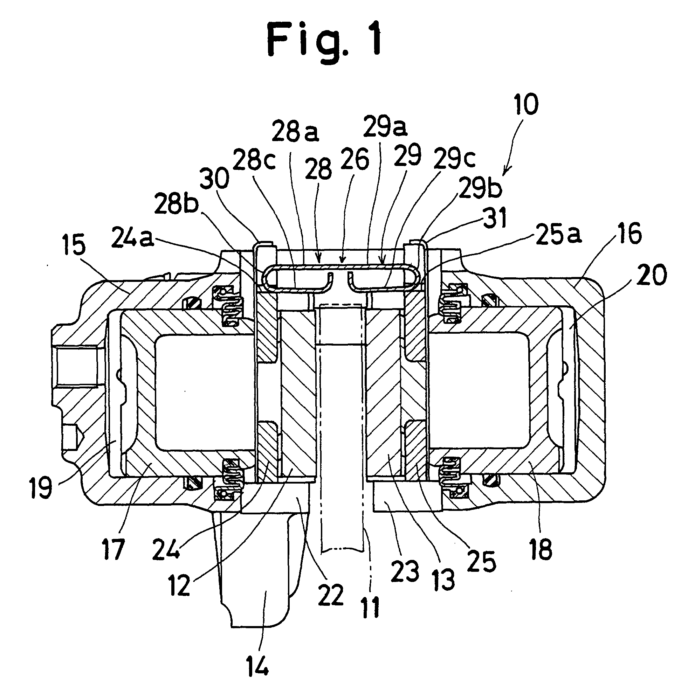

Referring first to Figures 1 to 4, there is shown an embodiment of a disc brake caliper assembly 10 of the invention for use with a brake disc. The disc brake caliper assembly 10 includes first and second opposed pads 12 and 13 for mounting on opposite sides of the brake disc 11 and being movable towards and away from the brake disc 11, and a stationary member 14 for receiving a braking torque from the pads 12 and 13 upon a braking operation. The stationary member 14 is provided with first and second cylinders 15 and 16 into which first and second pistons 17 and 18 are inserted to define first and second braking pressure chambers 19 and 20 in the cylinders 15 and 16 respectively. The pistons 17 and 18 are moved by braking pressures supplied to the braking pressure chambers 19 and 20, and the pads 12 and 13 are moved against the brake disc 11 by the pistons 17 and 18 respectively for applying a braking torque to the brake disc 11.

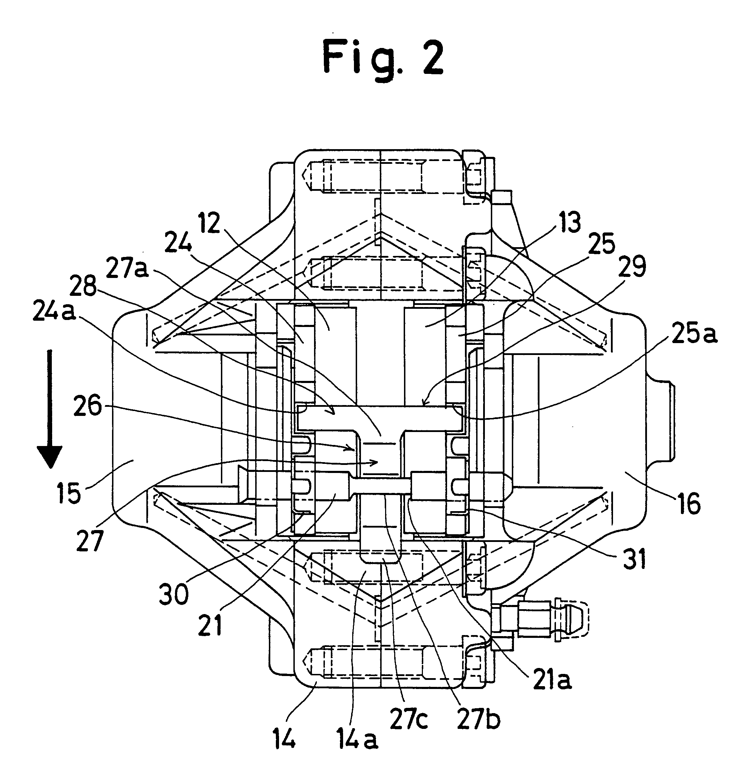

For supporting the pads 12 and 13 against radial movement relative to the brake disc 11, a single pad-supporting pin 21 and first and second reaction faces 22 and 23 are provided on the stationary member 14. The pad-supporting pin 21 is offset relative to a radial centre-line through the pads 12 and 13 in the normal forward rotating direction of the brake disc 11 as shown by an arrow in Figure 2. That direction of offset is referred to in this Specification as the forward direction. Both ends of the pad-supporting pin 21 are supported by being inserted into holes provided in the stationary member 14, and the pad-supporting pin 21 movably penetrates and slidingly supports a backing plate 24 of the pad 12 and a backing plate 25 of the pad 13. The first reaction face 22 absorbs braking reaction torque from a forwardly facing edge of the backing plate 24 of the pad 12 to prevent the pad 12 from undergoing pivotal movement about the pad-supporting pin 21, and associated radially inwardly directed movement of the said forwardly facing edge of the backing plate 24, during braking. The second reaction face 23 similarly absorbs braking reaction torque from a forwardly facing edge of the backing plate 25 of the pad 13.

For axially biasing the pads 12 and 13 apart and away from the brake disc 11 there is provided a spring member 26 made of sheet metal. The spring member 26 has a flexible spine portion 27 which lies above and between the pads 12 and 13, over an outer periphery of the brake disc 11. A curved locating portion 27b of the spine portion 27 passes beneath the pad-supporting pin 21 and is received in a recess 21a in the form of annular groove formed on a middle portion of the pad-supporting pin 21. Extending forwardly from the curved locating portion 27b of the spine portion 27 is a relatively short tail portion 27c which in use resiliently abuts a radially outwardly directed reaction face 14a of the stationary member 14. The rearwardly extending part of the spine portion 27 extends as far as a radial plane which bisects the pads, where at 27a it terminates in a pair of resilient transverse arms 28,29.

Each resilient transverse arm 28 or 29 comprises a laterally extending portion 28a or 29a extending outwardly above, and over a centre plane, of the associated brake pad 12 or 13, and a return portion extending from a distal end portion of the laterally extending portion inwardly and downwardly so as to contact the backing plate 24 or 25 of the associated pad 12 or 13, and to bias the associated pad away from the brake disc 11 on brake release.

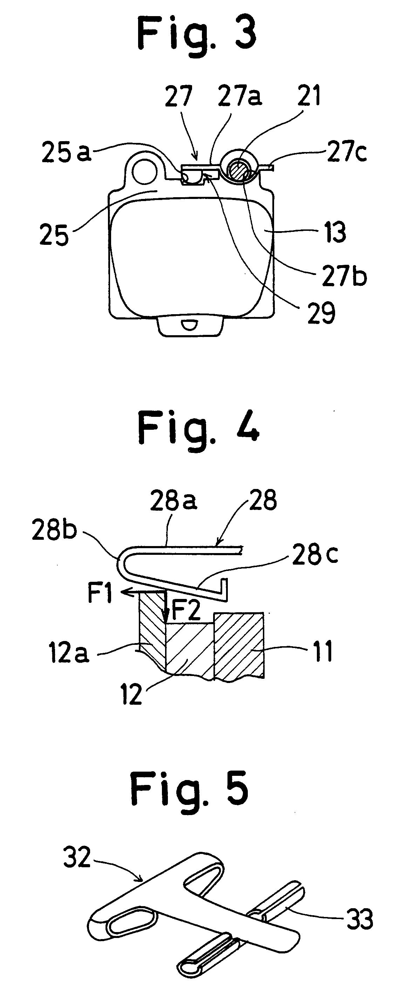

Each resilient transverse arm 28 or 29 thus comprises a first portion, being the laterally extending portion 28a or 29a; a third portion, being the return portion 28c or 29c; and a second portion, being a preferably curved joining piece 28b or 29b resiliently connecting together the first and third portions. Each third portion 28c or 29c extends obliquely across the edge of a shallow recess 24a or 25a formed in the upper edge of the backing plate 24 or 25 of the associated brake pad 12 or 13, to apply an axial biasing force F1 and a radial biasing force F2 on the associated pad 12 or 13 as illustrated in Figure 4 with reference to pad 12. The force F1 separates the pads from the brake disc on brake release and the force F2 prevents rattle of the pads in use.

The spring member 26 also limits the sliding movement of the pad-supporting pin 21 relative to the stationary member 14.

As shown in Figures 1 and 2, a shim member 30 is interposed between the backing plate 24 of the first pad 12 and the piston 17, and a shim member 31 is interposed between the backing plate 25 of the second pad 13 and the piston 17. The shim members 30 and 31 have apertures through which the pad-supporting pin 21 passes.

In Figure 5, there is shown a spring member 32 which may be used in a second embodiment, in place of the spring member 26 and the pad-supporting pin 21 described above. The spring member 32 incorporates an integral pad-supporting pin 33 to replace the pad-supporting pin 21 shown in Figures 1 to 4. The spring member 32 and its integral pad-supporting pin 33 are made of sheet metal and formed as one piece. A second embodiment of the invention, incorporating the spring member 32 and integral pin 33, is otherwise precisely as described above with reference to the first embodiment.

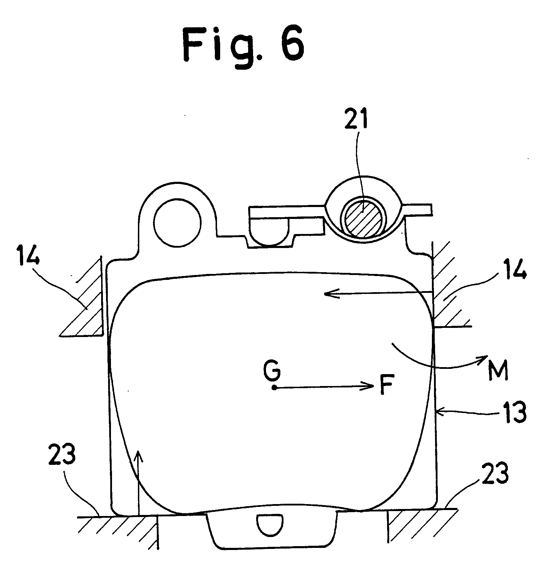

From Figure 6 it will be seen that during braking a force F is exerted on the pad 12 through its centre of gravity G. That provides a moment M inducing pivotal movement of the pad 12 about the pin 21. There is thus an associated bias on the pad 12 to urge the forwardly facing edge radially inwardly of the disc.

## Claims

1. A disc brake caliper assembly (10) for use with a brake disc (11) comprising:
first and second opposed brake pads (12,13) carried by a single pad-supporting pin (21,33) for mounting on opposite sides of the brake disc (11) for transferring braking torque from the brake disc to a stationary member (14) of the caliper assembly (10),
a single spring (26,32) for separating the pads (12,13) on brake release in use, the spring (26,32) comprising
a forwardly extending tail portion (27c) for abutting a stationary radially outwardly directed reaction face of the caliper assembly; and
a rearwardly extending resilient spine portion (27) having at a rear end (27a) a pair of resilient transversely extending arms (28,29) contacting central portions of the pair of pads (12,13) to bias the pads away from the brake disc (11) on brake release;
wherein the pad-supporting pin (21,33) is offset, in the direction of disc rotation, from a radial centre plane through the pads (12,13); and
CHARACTERISED IN THAT the spring (26,32) and the pad-supporting pin (21,33) are formed in one piece.

2. A disc brake caliper assembly according to claim 1, wherein each of the pair of resilient transversely extending arms (28,29) comprises a laterally extending portion (28a,29a) extending laterally outwardly above, and over a central portion of, an associated one of the pair of brake pads, the transverse arms (28,29) terminating in a pair of folded-under return portions (28c,29c) connected to the distal ends of the laterally extending portions (28a,29a) by resilient joining portions (28b,29b), wherein the return portions (28c,29c) extend inwardly and downwardly from the joining portions (28b,29b) so as to contact the brake pads (12,13) to bias the pads away from the brake disc (11) on brake release.

3. A disc brake caliper assembly according to claim 2, wherein the return portions (28c,29c) also bias the pads (12,13) radially inwardly of the disc (11).

4. A disc brake caliper assembly according to claim 2 or claim 3, wherein the return portions (28c,29c) contact the brake pads (12,13) at recessed portions (24a,25a) formed in the upper edges of backing plates (24,25) of the brake pads (12,13).

5. A disc brake caliper assembly according to any preceding claim, wherein the spring (26,32) is formed from sheet metal and the pad-supporting pin (26,33) is provided by forming lateral side extensions of the sheet metal into rolled pin ends coaxial with one another.

6. A disc brake caliper assembly according to any preceding claim, further comprising first and second opposed cylinders (15,16) provided in a stationary member (14), and first and second pistons (17,18) received in the first and second cylinders (15,16) to define first and second braking pressure chambers (19,20) in the first and second cylinders (15,16) respectively, the first and second pistons (17,18) being movable by braking pressures supplied to the first and second braking pressure chambers (19,20) respectively to effect actuation of the first and second brake pads (12,13) against the brake disc (11).

## Patentansprüche

1. Scheibenbremssattelaufbau (10) zur Verwendung mit einer Bremsscheibe (11), mit:
einander gegenüberliegenden ersten und zweiten Bremsklötzen (12, 13), die durch einen einzelnen Bremsklotz-Lagerbolzen (21, 23) zum Befestigen auf entgegengesetzten Seiten der Bremsscheibe (11) getragen werden, um ein Bremsdrehmoment von der Bremsscheibe auf ein stationäres Bauteil (14) des Bremssattelaufbaus (10) zu übertragen,
einer einzelnen Feder (26, 32) zum Trennen der Bremsklötze (12, 13) beim Freigeben der Bremse bei Betrieb, wobei die Feder (26, 32) aufweist:
einen sich nach vorne erstreckenden Schweifabschnitt (27c) zum Anlegen an eine stationäre radial nach außen gerichtete Reaktionsfläche des Bremssattelaufbaus; und
einen sich nach hinten erstreckenden, elastischen Rückenabschnitt (27), der an einem Hinterende (27a) ein Paar elastischer sich quer erstreckender Arme (28, 29) aufweist, die Mittelabschnitte der Bremsklötze (12, 13) des Bremsklotzpaars berühren, um die Bremsklötze beim Freigeben der Bremse von der Bremsscheibe (11) weg vorzuspannen, wobei
der Bremsklotz-Lagerbolzen (21, 33) in Scheibendrehrichtung von einer Radialmittelebene durch die Bremsklötze (12, 13) versetzt ist; und
der Scheibenbremssattelaufbau **dadurch gekennzeichnet** ist, dass die Feder (26, 32) und der Bremsklotz-Lagerbolzen (21, 33) als ein Stück ausgebildet sind.

2. Scheibenbremssattelaufbau nach Patentanspruch 1, wobei jeder Arm des Paars elastischer sich quer erstreckender Arme (28, 29) einen sich lateral erstreckenden Abschnitt (28a, 29a) aufweist, der sich oberhalb lateral nach außen und über einen Mittelabschnitt des zugehörigen Bremsklotzes des Bremsklotzpaars erstreckt, wobei die Querarme (28, 29) in einem Paar nach unten geklappter Umkehrabschnitte (28c, 29c) enden, die durch elastische Verbindungsabschnitte (28b, 29b) mit den entfernten Enden der sich lateral erstreckenden Abschnitte (28a, 29a) verbunden sind, und die Umkehrabschnitte (28c, 29c) sich von den Verbindungsabschnitten (28b, 29b) nach innen und unten erstrecken, so dass sie die Bremsklötze (12, 13) berühren, um die Bremsklötze beim Freigeben der Bremse von der Bremsscheibe (11) weg vorzuspannen.

3. Scheibenbremssattelaufbau nach Patentanspruch 2, wobei die Umkehrabschnitte (28c, 29c) auch die Bremsklötze (12, 13) relativ zur Scheibe (11) auch radial nach innen vorspannen.

4. Scheibenbremssattelaufbau nach Patentanspruch 2 oder 3, wobei die Umkehrabschnitte (28c, 29c) die Bremsklötze (12, 13) an vertieften Abschnitten (24a, 25a) berühren, die auf den Oberkanten der Verstärkungsplatten (24, 25) der Bremsklötze (12, 13) ausgebildet sind.

5. Scheibenbremssattelaufbau nach einem der vorhergehenden Patentansprüche, wobei die Feder (26, 32) aus Metallblech ausgebildet ist, und der BremsklotzLagerbolzen (26, 33) durch Ausbilden von Lateralseitenverlängerungen des Metallblechs zu zueinander koaxialen gerollten Bolzenenden vorgesehen ist.

6. Scheibenbremssattelaufbau nach einem der vorhergehenden Patentansprüche, mit außerdem einander gegenüberliegenden ersten und zweiten Zylindern (15, 16), die in einem stationären Bauteil (14) vorgesehen sind, und ersten und zweiten Kolben (17, 18), die im ersten und zweiten Zylinder (15, 16) aufgenommen sind, um im ersten und zweiten Zylinder (15, 16) jeweils eine erste und eine zweite Bremsdruckkammer (19, 20) festzulegen, wobei der erste und zweite Kolben (17, 18) jeweils durch der ersten und zweiten Bremsdruckkammer (19, 20) zugeführte Bremsdrücke beweglich ist, um eine Betätigung des ersten und zweiten Bremsklotzes (12, 13) gegen die Bremsscheibe (11) zu bewirken.

## Revendications

1. Un étrier de frein à disque (10) destiné à être utilisé avec un disque de frein (11) comprenant :
une première et une deuxième plaquettes de frein (12, 13) opposées portées par une seule goupille de support de plaquettes (21, 33) pour montage sur les côtés opposés du disque de frein (11) pour transférer le couple de freinage du disque de frein à un membre fixe (14) de l'étrier (10),
un seul ressort (26, 32) pour séparer les plaquettes (12, 13) lors du desserrage du frein dans le cadre d'une utilisation, le ressort (26, 32) comprenant
une extrémité extensible vers l'avant (27c) pour toucher une face de réaction de l'étrier, face fixe dirigée vers l'extérieur de manière radiale ; et
une colonne élastique extensible vers l'arrière (27) ayant à l'extrémité arrière (27a) deux bras élastiques extensibles de manière transversale (28, 29) qui entrent en contact avec les parties centrales des deux plaquettes (12, 13) pour éloigner les plaquettes du disque de frein (11) en diagonale lors du desserrage du frein ;
où la goupille de support de plaquettes (21, 33) est décalée, dans le sens de la rotation du disque à partir d'un plan central radial par le biais des plaquettes (12, 13) ; et
CARACTERISE EN CE QUE le ressort (26, 32) et la goupille de support de plaquettes (21, 33) sont formés en une pièce.

2. Un étrier de frein à disque suivant la revendication 1, où chacun des deux bras élastiques extensibles de manière transversale (28, 29) comprend une partie extensible latéralement (28a, 29a) qui s'étend de manière latérale vers l'extérieur au-dessus, et sur une partie centrale d'une des deux plaquettes de frein connexe, les bras transversaux (28, 29) terminant dans deux portions de retour repliées dessous (28c, 29b) connectées aux extrémités distale des portions extensibles de manière latérale (28a, 29a) par des parties d'assemblage élastiques (28b, 29b), où les parties de retour (28c, 29c) s'étendent vers l'intérieur et vers le bas depuis les parties d'assemblage (28b, 29b) afin d'entrer en contact avec les plaquettes de frein (12, 13) pour éloigner les plaquettes du disque de frein (11) lors du desserrage du frein.

3. Un étrier de frein à disque suivant la revendication 2, où les parties de retour (28c, 29c) éloignent également les plaquettes (12, 13) du disque (11) de manière radiale et vers l'intérieur.

4. Un étrier de frein à disque suivant la revendication 2 ou la revendication 3, où les parties de retour (28c, 29c) entrent en contact avec les plaquettes de frein (12, 13) au niveau des parties fraisées (24a, 25a) formées dans les bords supérieurs des plaques d'appui (24, 25) des plaquettes de frein (12, 13).

5. Un étrier de frein à disque suivant les revendications précédentes, où le ressort (26, 32) est formé par une tôle et la goupille de support de plaquettes (21, 33) est réalisée en formant des extensions latérale de la tôle dans les extrémités de la goupille laminée coaxiales l'une avec l'autre.

6. Un étrier de frein à disque suivant les revendications précédentes, comprenant également un premier et un deuxième cylindres opposés (15, 16) prévus dans un membre fixe (14), et un premier et un deuxième pistons (17, 18) reçus dans le premier et le deuxième cylindres (15, 16) pour définir la première et la deuxième chambres de pression de freinage (19, 20) dans le premier et le deuxième cylindres (15, 16) respectivement, le premier et le deuxième pistons (17, 18) étant mobiles par les pressions de freinage fournies à la première et la deuxième chambres de pression de freinage (19, 20) respectivement pour effectuer l'actionnement de la première et de la deuxième plaquettes de frein (12, 13) contre le disque de frein (11).
